# EUROPÄISCHE PATENTSCHRIFT

(11) **EP 0 529 354 B1**
(45) Veröffentlichungstag und Bekanntmachung des Hinweises auf die Patenterteilung: **28.09.1994**
(21) Anmeldenummer: 92113256.9
(22) Anmeldetag: 04.08.1992
(51) Int. Cl.: F16C 19/52, G01N 27/90

(54) **Vorrichtung zum Überwachen von Wälzlagern**
Device for monitoring rolling contact bearings
Dispositif pour surveiller des paliers à contact de roulement

(30) Priorität: 30.08.1991 DE 4128807
(43) Veröffentlichungstag der Anmeldung: 03.03.1993
(73) Patentinhaber: Fried. Krupp AG Hoesch-Krupp, 44145 Dortmund (DE)
(72) Erfinder: Becker, Dieter, W-4780 Lippstadt (DE); Werther, Wolfgang, W-4780 Lippstadt-Rixbeck (DE); Koss, Engelbert, W-4724 Wadersloh-Liesborn (DE); Wozniak, Johannes, Dr., W-4780 Lippstadt-Lipprode (DE)

(56) Entgegenhaltungen:
- EP-A- 0 228 731
- EP-A- 0 413 119
- DE-A- 2 418 056
- GB-A- 1 158 735
- US-A- 4 170 755
- US-A- 4 551 677

## Beschreibung

Die Erfindung betrifft eine Vorrichtung zum Überwachen von Wälzlagern nach dem Oberbegriff des Anspruchs 1.

Für verschiedene Einsatzfälle, insbesondere bei Großwälzlagern zum Einsatz im Offshore-Bereich bei Kranen oder Bojen, ist es sinnvoll, Prüfvorrichtungen vorzusehen, die zerstörungsfrei und ohne Zerlegung des Lagers in der Lage sind, Fehler und Risse an der Laufbahn bzw. an angrenzenden Bereichen der Lagerringe festzustellen.

Hierzu wird nach der DE-A-24 18 056 vorgeschlagen, die Verlagerung zwischen Außenring und Innenring eines Lagers zu messen. Bei Verschleiß der Laufbahn oder der Wälzkörper tritt eine derartige Verlagerung ein. Das Maß der Verlagerung ist ein Hinweis auf den Grad der Laufbahn- bzw. Wälzkörperzerstörung. Risse in der Laufbahn bzw. im Übergang zwischen Laufbahn und Lagerring können nach dieser Methode nicht festgestellt werden. Hierzu wird nach der EP-A-0 228 731 vorgeschlagen, in wenigstens einem Lagerring wenigstens eine Öffnung anzuordnen, in die eine Ultraschallsonde eingesetzt werden kann. Über eine Koppelfläche am anderen Lagerring sollen dann Materialfehler in diesem erkannt werden. Nachteilig bei dieser Ausbildung können die Oberflächenfehler nur indirekt gemessen werden, d. h., der an eine Koppelfläche angekoppelte Prüfkopf der Ultraschallmeßeinrichtung muß erst einen Teil des Lagerringes durchstrahlen, um Oberflächenfehler im gefährdeten Bereich des Laufbahnsystems messen zu können. Dadurch kann es durch Materialeinschlüsse oder Gefügeänderungen zu Fehlanzeigen kommen. Darüber hinaus ist das Meßfeld derartig eingeschränkt, schränkt, daß die Tiefe eines aufgetretenen Risses nicht genau feststellbar ist. Weiterhin nachteilig werden bei allen bisher bekannten Meßsystemen elektrische Verbindungen zu den Sensoren bzw. Meßsonden benötigt, die durch Durchbrüche im Lagerring verlaufen und über Steckerverbindungen mit den Auswertegeräten verbunden werden. Beim Einsatz im Offshore-Bereich, insbesondere beim Einsatz von Großwälzlagern in Bojen, die zum Teil unter Wasser liegen, ist eine derartige Ausbildung oft nur schwer anwendbar, da es in diesen Fällen leicht zu Kurzschlüssen kommen kann bzw. die Lagerringe nur schwer zugänglich sind.

Der Erfindung liegt die Aufgabe zugrunde, eine Vorrichtung zum Erkennen und Überwachen von Schäden an Laufbahnen von Wälzlagern zu finden, die einerseits in der Lage ist, eine genaue Messung von Rissen und Ausbrüchen in der Laufbahn bzw. im Übergangsbereich der Laufbahnen zum Lagerring festzustellen, und die andererseits die Meßergebnisse ohne Durchbrüche im Lagerring mit Stecker und Kabel an die Auswertegeräte weiterzugeben in der Lage ist.

Diese Aufgabe wird erfindungsgemäß durch die Merkmale des Anspruchs 1 gelöst. Vorteilhafte Aus- und Weiterbildungen sind in den Ansprüchen 2 bis 6 beschrieben. Die Erfindung weist den Vorteil auf, daß kein zusätzlicher Bauraum im Wälzlager für die Überwachungsvorrichtung benötigt wird. Weiterhin kann die Überwachungseinrichtung unabhängig von der Lage und den Umgebungseinflüssen des Lagers betrieben werden. Es ist kein besonders gearteter Zugang zum Lagersystem erforderlich. Durch die Ausbildung nach Anspruch 3 ist hinsichtlich der Energiezufuhr für die Überwachungsvorrichtung keine Beschränkung in bezug auf die Lebensdauer gegeben. Vorteilhaft gegenüber den bisher verwendeten Ultraschallsonsoren ist beim Einsatz von elektromagnetischen Hochfrequenzspulen entsprechend Anspruch 5 eine kontinuierliche Überwachung möglich. Diese Sensoren liegen im Gegensatz zu Ultraschallsensoren nicht am zu prüfenden Lagerring an und damit tritt kein Verschleiß durch Schleifvorgänge auf.

Ein Ausführungsbeispiel der Erfindung ist in der Zeichnung dargestellt und wird im folgenden näher beschrieben.

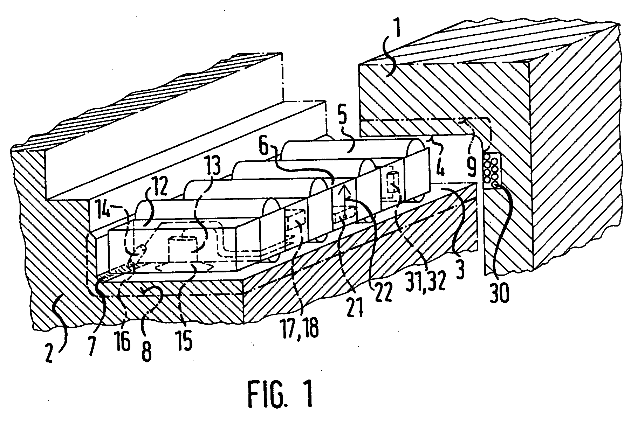

Es zeigen
- Fig. 1:: ein Meßsystem im Zusammenwirken mit den sie umgebenden Lagerteilen,
- Fig. 2:: den systematischen Aufbau eines derartigen Meßsystems mit elektromagnetischen Kochfrequenzspulen als Sensoren,
- Fig. 3:: die Anordnung eines induktiven Wegmeßsensors zum Messen der axialen Verschiebung der Lagerringe gegeneinander und
- Fig. 4:: der Aufbau nach Fig. 3 zur Messung der radialen Verschiebung.

Das Großwälzlager besteht aus einem Außenring 1 und einem Innenring 2, zwischen denen auf Laufbahnen 3, 4 Wälzkörper 5 angeordnet sind. Im Ausführungsbeispiel sind die Wälzkörper Zylinderrollen. Zur Führung und Separierung der Wälzkörper 5 ist ein Käfig 6 vorgesehen, dessen Stege 12 zwischen die Wälzkörper 5 greifen. Die Laufbahnen 3, 4 und zum Teil der Übergang 7 von der Laufbahn 3 zum Lagerring 2 ist einer Wärmebehandlung unterworfen, so daß hier eine Härteschicht 8, 9 vorliegt. Zur Überwachung von Ausbrüchen 10 in der Laufbahn 3 oder Rissen 11 im Übergang 7 zwischen Laufbahn und Lagerring sind in einem oder mehreren Stegen 12 zwei elektromagnetische Hochfrequenzspulen 13, 14 angeordnet. Die hochfrequenten elektromagnetischen Felder 15, 16 im aktiven Bereich dieser Spulen erzeugen in der lotrechten Ebene von Laufbahn 3 oder Übergang 7 Wirbelströme. Diese magnetische Kopplung bewirkt eine von der Änderung des Luftspaltes abhängige Dämpfung des Schwingungskreises. Die hieraus resultierende Amplitudenänderung bestimmt die Meßsignalgröße.

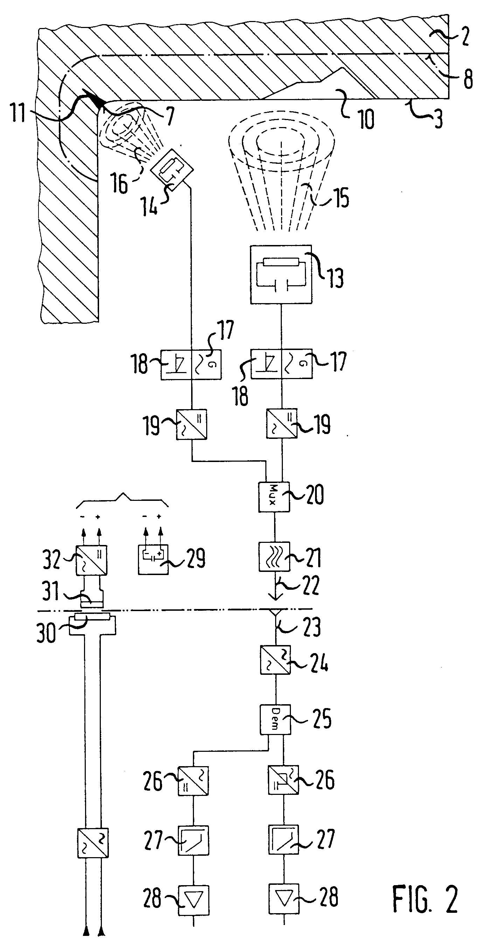

In Fig. 2 ist die Meßsignalaufbereitung systematisch dargestellt. Zur Signalaufbereitung und -weiterleitung sind vorgesehen: Oszillator 17, Demodulator 18, Signalaufbereiter 19, Multiplexer 20, Sender 21, Sendeantenne 22, Empfangsantenne 23, Empfänger 24, Demodulator 25, Rückwandler 26, Filter 27 und Signalaufbereiter 28. Diese Bauteile können zusammen oder als mehrere Bauteile ebenfalls in weiteren Stegen 12 des Käfigs 6 untergebracht werden. Für die Betriebsenergie von Hochfrequenzspulen 13, 14 als Sensoren und der zugehörigen Elektronik einschließlich des Senders im Käfig des Lagers können Batterien 29 verwendet werden. Dabei ist es sinnvoll, durch geeignete Maßnahmen sicherzustellen, daß diese Bauteile durch elektrische Signale ein- und ausgeschaltet werden können.

Im Ausführungsbeispiel wird die Betriebsenergie induktiv durch das Lager von außen zugeführt. Dazu ist im Außenring 1 des Lagers angrenzend an den Wälzkörperbauraum eine Induktionsspule 30 angeordnet. Die hier eingeleitete Energie wird induktiv zu einer am Käfig 6 angebrachten Sekundärspule 31 übertragen und über einen Gleichrichter 32 den hier angeordneten Bauteilen zugeführt.

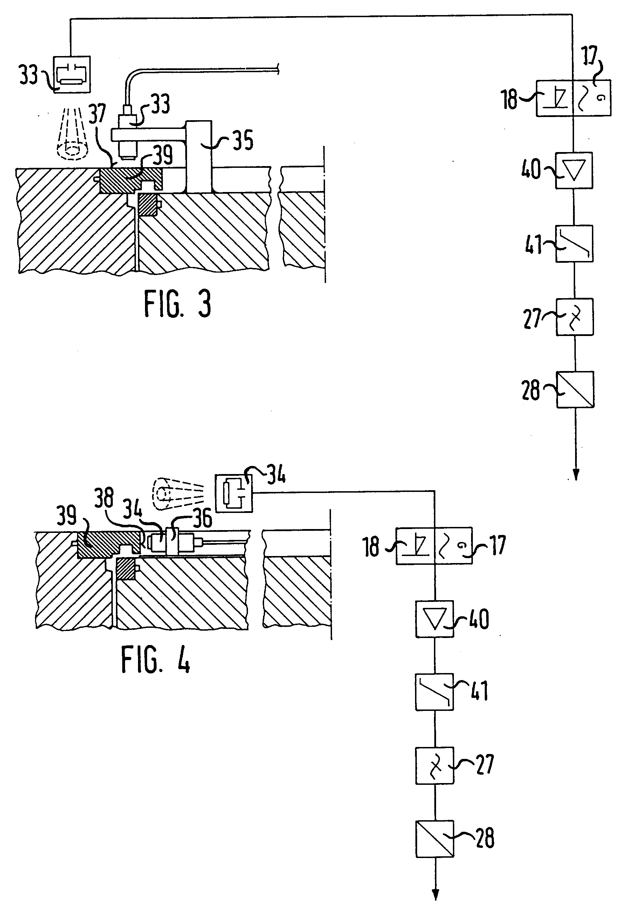

Zur Ergänzung der Messungen im Wälzkörperbauraum kann über induktive Wegmeßsensoren 33, 34 die radiale und axiale Verlagerung der Lagerringe 1, 2 gegeneinander gemessen werden. Die mögliche Anordnung dieser Wegmeßsensoren 33, 34 ist prinzipiell in den Figuren 3 und 4 dargestellt. Die Sensoren können beispielsweise über Halteböcke 35 oder Schellen 36 mit einem der Lagerringe, beispielsweise dem Innenring 2, verbunden sein und werden dann gegen entsprechende Meßflächen 37, 38 eines Meßringes 39 des Außenringes 1 gerichtet. Die Signalaufbereitung für diese Wegmeßsensoren geschieht analog der Signalaufbereitung der Sensoren im Wälzkörperbauraum durch Oszillator 17, Demodulator 18, Verstärker 40, Linearisierer 41, Filter 27 und Signalaufbereiter 28.

## Patentansprüche

1. Vorrichtung zum Erkennen und Überwachen von Schäden an Laufbahnen (3,4) oder angrenzenden Bereichen der Lagerringe (1,2) bei Wälzlagern, dadurch gekennzeichnet, daß ein oder mehrere Sensoren (13,14) im Wälzkörperbauraum zwischen den Wälzkörpern (5) angeordnet sind, deren Meßsignale auf elektromagnetischem Wege einer Antenne (23) außerhalb des Lagers zugeführt werden.

2. Vorrichtung nach Anspruch 1, dadurch gekennzeichnet, daß der Sensor (13;14) und der zugehörige Sender (21) durch ebenfalls im Wälzkörperbauraum angeordnete Batterien (29) betrieben werden.

3. Vorrichtung nach Anspruch 1, dadurch gekennzeichnet, daß dem Sensor (13;14) und dem zugehörigen Sender (21) die Betriebsenergie induktiv durch das Lager von außen zugeführt wird.

4. Vorrichtung nach Anspruch 3, dadurch gekennzeichnet, daß in einem der Lagerringe (1) angrenzend an den Wälzkörperbauraum eine Induktionsspule (30) angeordnet ist.

5. Vorrichtung nach einem oder mehreren der Ansprüche 1 bis 4, dadurch gekennzeichnet, daß als Sensor ein oder mehrere elektromagnetische Kochfrequenzspulen (13, 14) verwendet und an den verschleiß- oder rißgefährdeten Laufbahnbereich angeordnet werden.

6. Vorrichtung nach einem oder mehreren der Ansprüche 1 bis 5, dadurch gekennzeichnet, daß zusätzliche, außerhalb der Lagerringe angeordnete induktive Wegmeßsensoren (33, 34) radiale und/oder axiale Lagerspielveränderungen messen.

## Claims

1. Device for detecting and monitoring damage to roller paths (3, 4) or adjacent regions of bearing rings (1, 2) in roller bearings, characterised in that one or a plurality of sensors (13, 14) is disposed in the roller body installation space between the roller bodies (5) and the measured signals of these sensors are directed in an electro-magnetic way to an antenna (23) outside the bearing.

2. Device according to claim 1, characterised in that the sensor (13, 14) and the associated transmitter (21) are driven by batteries (29) which are likewise disposed in the roller bearing installation space.

3. Device according to claim 1, characterised in that the operating energy is directed from the outside in an inductive manner through the bearing to the sensor (13, 14) and to the associated transmitter (21).

4. Device according to claim 3, characterised in that an induction coil (30) is disposed in one of the bearing rings (1) contiguous to the roller body installation space.

5. Device according to one or more of claims 1 to 4, characterised in that one or a plurality of electro-magnetic high-frequency coils (13, 14) are used as a sensor and are disposed on the roller path region which is in danger of wearing or cracking.

6. Device according to one or more of claims 1 to 5, characterised in that additional inductive distance measure sensors (33, 34) which are disposed outside the bearing rings measure the radial and/or axial changes in the bearing play.

## Revendications

1. Dispositif de détection et de surveillance de la détérioration des chemins de roulement (3, 4) ou de parties adjacentes des bagues de paliers (1, 2), de paliers à contact de roulement, caractérisé en ce qu'un ou plusieurs capteurs (13, 14) sont disposés entre les éléments de roulement (5) dans l'enceinte de montage des éléments de roulement, leurs signaux de mesure étant transmis par voie électromagnétique a une antenne (23) située en-dehors du palier.

2. Dispositif selon la revendication 1, caractérisé en ce que le capteur (13, 14) et l'émetteur (21) associé sont alimentés par des batteries (29) également disposées dans l'enceinte de montage des éléments de roulement.

3. Dispositif selon la revendication 1, caractérisé en ce que l'énergie de fonctionnement est transmise de l'extérieur, par induction à travers le palier, au capteur (13, 14) et à l'émetteur (21) associe.

4. Dispositif selon la revendication 3, caractérisé en ce qu'une bobine d'induction (30) est disposée dans une des bagues de palier (1), adjacente à l'enceinte de montage des éléments de roulement.

5. Dispositif selon l'une ou plusieurs des revendications 1 à 4, caractérisé en ce que l'on utilise comme capteur une ou plusieurs bobines électromagnétiques à haute fréquence (13, 14) qui sont disposées sur la partie de la piste de roulement exposée à l'usure ou à la fissuration.

6. Dispositif selon l une ou plusieurs des revendications 1 à 5, caractérisé en ce que des capteurs inductifs supplémentaires de mesure de déplacement (33, 34) disposés à l'extérieur des bagues de palier mesurent des modifications radiales et/ou axiales du jeu du palier.
